**Europäisches Patentamt**

**European Patent Office**

**Office européen des brevets**

(19)

(11) Veröffentlichungsnummer: **0 192 684**
**B1**

(12) ## EUROPÄISCHE PATENTSCHRIFT

(45) Veröffentlichungstag der Patentschrift:
**24.05.89**

(21) Anmeldenummer: **85904216.0**

(22) Anmeldetag: **05.09.85**

(86) Internationale Anmeldenummer:
**PCT/CH 85/00128**

(87) Internationale Veröffentlichungsnummer:
**WO 86/01572 (13.03.86 Gazette 86/6)**

(51) Int. Cl.⁴: **F 16 H 15/08**

(54) **REIBRAD-DREHMOMENTWANDLER.**

(30) Priorität: **06.09.84 CH 4248/84**

(43) Veröffentlichungstag der Anmeldung:
**03.09.86 Patentblatt 86/36**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**EP-A- 0 038 462**
**FR-A- 837 117**
**FR-A- 881 592**
**FR-A- 885 314**
**FR-A- 1 526 650**
**FR-A- 2 187 067**
**US-A- 2 209 878**
**US-A- 4 330 383**
**US-A- 4 419 505**

(73) Patentinhaber: **DELTA AG, Langendorfstrasse 2,
CH-4500 Solothurn (CH)**

(72) Erfinder: **LAMPERT, Heinz, Fuchsbühelstr. 50,
CH-9470 Buchs (CH)**

(74) Vertreter: **Troesch, Hans Alfred, Dr. Ing. Dr. Troesch AG
Patentanwälte VSP et al, Walchestrasse 19,
CH-8035 Zürich (CH)**

# Beschreibung

Die vorliegende Erfindung betrifft einen Reibrad-Drehmomentwandler gemäss Wortlaut des Oberbegriffs von Anspruch 1.

Solche Drehmomentwandler eignen sich für Antriebe oder auch für Generatoren, bei denen im Betrieb unterschiedliche Belastungen bei unterschiedlichen Geschwindigkeiten auftreten. Dies ist z.B. bei Elektromobilen der Fall. Hier werden auch oft elektronische Geschwindigkeitsregelungen eingesetzt, die jedoch keine Drehmomentwandlung bewirken können. Bei Automobilen werden deshalb Schaltstufen-Getriebe oder stufenlose hydraulische Wandler eingesetzt. Alle diese bekannten Lösungen weisen jedoch erhebliche Nachteile auf. Entweder tritt keine Drehmomentwandlung auf, oder die Wandler sind aufwendig und teuer, oder sie weisen hohe Verluste auf.

Ein Reibrad-Drehmomentwandler obgenannter Art ist aus der FR-A-88 1592 bekannt. Dabei wird die stufenlose Änderung des Übersetzungsverhältnisses nach Wunsch gesteuert, beispielsweise manuell verstellt.

Es ist Aufgabe der vorliegenden Erfindung, einen Reibrad-Drehmomentwandler der genannten Art so weiter zu bilden, dass er das Übersetzungsverhältnis entsprechend dem momentanen Lastmoment automatisch und stufenlos einregelt und der einen hohen Wirkungsgrad aufweist.

Die Erfindung wird nach dem Wortlaut des kennzeichnenden Teils von Anspruch 1 gelöst.

Im folgenden wird die Erfindung anhand der Zeichnungen beispielsweise erläutert.

Dabei zeigt:

Fig. 1 eine Ausführung von vorn,

Fig. 2 die Ausführung von Fig. 1 von der Seite,

Fig. 3 eine schematische Darstellung der Wirkungsweise,

Fig. 4 eine schematische Darstellung des Wagens und der darauf wirkenden Kräfte,

Fig. 5 und 6 Ausführungen der Wagenführung,

Fig. 7 eine Anpressvorrichtung mit Rädern,

Fig. 8 einen Endlagenhebel als Endlagenrückführung,

Fig. 9 eine schematische Darstellung der Regel-Charakteristik mit Driftregelgrenze.

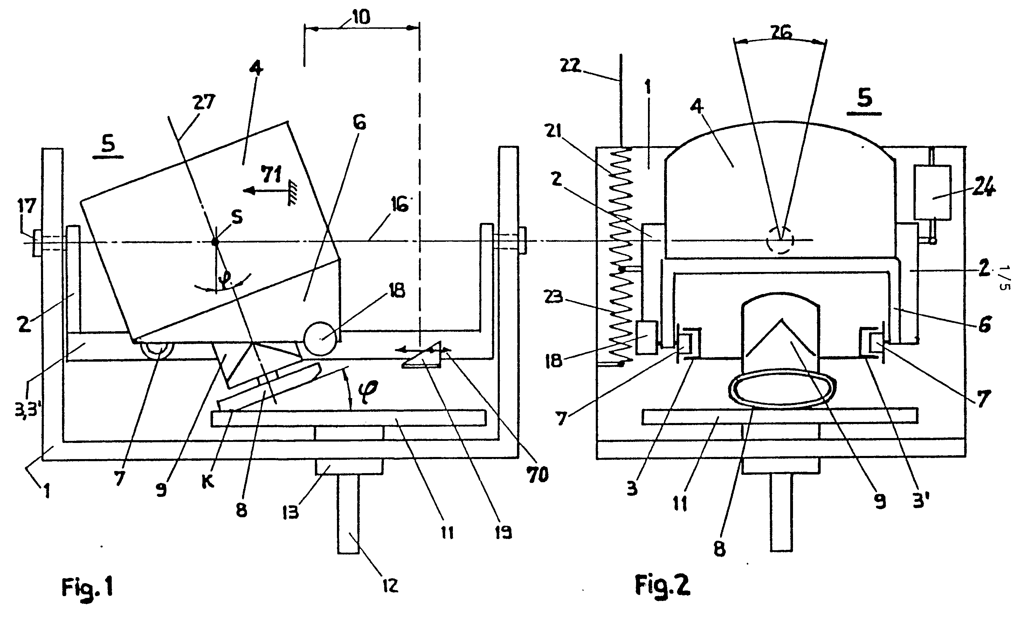

Das Ausführungsbeispiel in Fig. 1 zeigt einen Reibrad-Drehmomentwandler mit einem Gehäuse 1, in welchem eine Schwinge 2 in einer Lagerung 17 drehbar gelagert ist. Es kann sich dabei um eine zweiseitige Lagerung, wie dargestellt, oder um eine einseitige handeln. Ein Antrieb, hier ein Motor 4 mit einer Antriebsachse 27, ist auf einem Wagen 6 befestigt. Dieser Wagen 6 läuft auf zwei Führungsschienen 3, 3' der Schwinge 2, z.B. mittels Rollen 7. Die Motorwelle trägt ein ringförmiges Reibrad 8, welches über eine Anpressvorrichtung 9 axial zur Antriebsachse 27 verschiebbar geführt ist. Das Reibrad 8 treibt einen als Abtriebsscheibe 11 ausgeführten Abtriebskegel an, mit Abtriebsachse 12, welche im Gehäuse 1 durch ein Lager 13 gehalten ist. Die Realisation des Abtriebskegels mit 180° Öffnungswinkel, als ebene Scheibe 11, ist besonders einfach. Dieses Lager 13 kann z.B. aus einem zweireihigen Schrägkugellager bestehen. Von dieser Abtriebsachse 12 aus kann dann z.B. ein Elektromobil oder eine Maschine angetrieben werden. Die Verstellvorrichtung 5 besteht aus dem beweglichen Teil, d.h. aus Schwinge 2, Antriebsmotor 4, Wagen 6, Anpressvorrichtung 9 und Reibrad 8. Der vorliegende Reibrad-Drehmomentwandler funktioniert aber auch in umgekehrter Richtung, indem z.B. die Abtriebsachse 12 angetrieben wird und anstelle des Antriebs oder Motors 4 ein Generator vorgesehen ist. Mittels geeigneter Gleichstrommotoren 4 kann auf diese Art auch eine Rekuperationsbremse im Falle von Elektromobilen vorgesehen werden. Dabei treibt die zu vernichtende kinetische Energie des Elektromobils diesen Motor 4 als Generator an, welcher dadurch Strom in die Antriebsbatterien zurückspeist. Vorzugsweise wird die Schwenkachse 16, um die die Schwinge 2 geschwenkt oder ausgelenkt werden kann, durch den Schwerpunkt S der Verstellvorrichtung 5, d.h. des beweglichen Teils, bestehend aus Motor, Wagen, Schwinge, Anpressvorrichtung und Reibrad, geführt. Die Schwenkachse 16 und die lineare Rollenführung mit Führungsschienen 3, 3' und den Rollen 7 liegen im wesentlichen parallel zur Ebene der Abtriebsscheibe 11, bzw. i.a. zu einer Mantellinie des Abtriebskegels.

Anstelle eines mit dem beweglichen Wagen festverbundenen Motors 4 kann die erfindungsgemässe Vorrichtung auch mit einem aussenliegenden ruhenden Motor ausgeführt werden, z.B. durch Kraftübertragung von diesem fixen, externen Motor auf ein bewegliches Wagengehäuse 6 mittels flexibler Welle oder Keilwelle als Mitnehmerwelle – was in diesem Falle dem Antrieb 4 entspricht. Dieses Wagengehäuse wird dann wieder analog an einer drehbaren Schwinge 2 linear und parallel zur Abriebsscheibe 11 geführt.

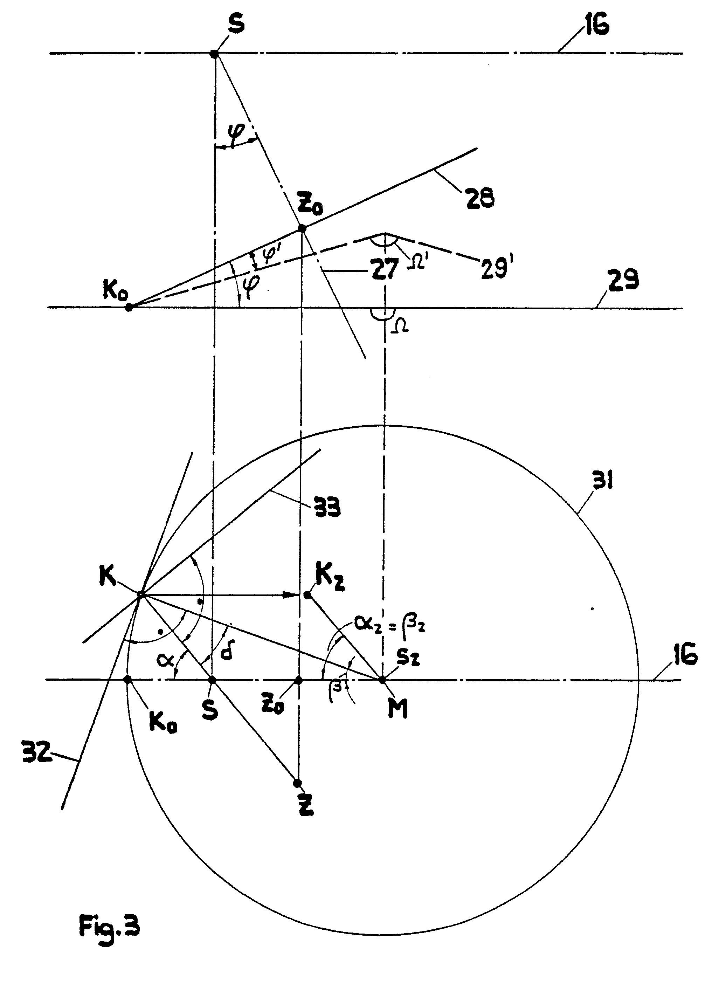

Der Neigungswinkel $\varphi$ zwischen Antriebsachse 27 und Abtriebsachse 12 ist hier gleich dem Winkel $\varphi'$ zwischen Reibrad 8 und Abtriebsscheibe 11. Im allgemeinen Fall ist Winkel $\varphi'$ zwischen Reibrad 8 und Abtriebskegel 11 (gestrichelt dargestellt in Fig. 3) kleiner als der Neigungswinkel $\varphi$. Mit dem Öffnungswinkel des Abtriebskegels, $\Omega$ bzw. $\Omega'$, wird ein zusätzlicher Parameter eingeführt, welcher je nach Anwendung zusammen mit den andern geometrischen Grössen optimiert werden kann.

So kann z.B. bei einem Neigungswinkel $\varphi$ von 10° $\varphi'$ auf 2° reduziert werden, durch Reduktion des Öffnungswinkels des Abtriebskegels von $\Omega = 180°$ auf $\Omega' = 164°$.

Fig. 2 zeigt die gleiche Vorrichtung von der Seite bei entfernter Frontplatte des Gehäuses 1. So sind die beiden Führungsschienen 3 und 3' sichtbar, in welchen hier an beiden Wagenenden je zwei Rollen 7 mit einfachem Spurkranz laufen. Diese Räder 7 sind mittels einer einstellbaren Achsschraube am Wagen 6 befestigt. An der Schwinge 2 greifen als Kraftübertragungselement zwei Federn an: die Vorspannfeder 21, welche z.B. in einen Gaszug 22 übergeht und die Gegenfeder oder Rekuperationsfeder 23, welche hier am Gehäuse 1 fixiert ist.

Durch Verstellung der Kraft des Kraftübertragungselementes, wie der dargestellten Feder, auf die Schwinge 2, können verschiedene Betriebsarten realisiert bzw. angesteuert werden, wie kontinuierliches Beschleunigen und Abbremsen durch Verstellen der Kraft in beide Richtungen, somit des Motorstroms in beide Polaritäten bezüglich der Motor-Speisespannung. Es können aber auch diskrete, fixe Leistungsaufnahme- bzw. Abgabewerte eingestellt werden.

Ebenfalls zwischen Schwinge 2 und Gehäuse 1 ist auch ein Stoss- oder Schwingungsdämpfer 24 angeordnet. Dieser Stossdämpfer ist vorzugsweise doppelt wirkend, kompakt und einstellbar ausgebildet. Er begrenzt damit auch den Schwenkbereich 26 des beweglichen Teils mit Schwinge 2, Wagen 6, Reibrad 8 und Motor 4. Es ist nicht immer notwendig, einen hydraulischen Stossdämpfer vorzusehen, oft genügt auch ein einfacher Reibungsdämpfer, ein Trägheitsdämpfer und dämpfend ausgebildete Anschläge, welche den Schwenkbereich der Schwinge begrenzen. Aussen am Wagen ist hier eine Endlagenrolle 18 angebracht, welche am Ende des Verstellbereichs 10 auf einen Endlagenkeil 19 auffährt (Fig. 1). Wie später erläutert wird, wird der Wagen durch diese Endlagenelemente 18, 19 in die Neutralstellung gebracht und die Verstellkraft, welche den Wagen bis an den Anschlag verschoben hat, wird aufgehoben.

Die Wirkungsweise der automatischen Regelung, d.h. der Verschiebung im Regelbereich, wird anhand von Fig. 3 erläutert. In der Neutralstellung, wenn die Übersetzung nicht verändert wird, liegt der Kontaktpunkt $K_o$, indem die Reibradebene 28 die Abtriebsscheibe 29 bzw. den Abtriebskegel 29' berührt, senkrecht unter der Schwenkachse 16, ebenso wie das Zentrum $Z_o$ der Reibradebene 28. Wird nun der Wagen 6 mit Motor und Reibrad um die Schwenkachse 16 ausgelenkt, so wandert der Kontaktpunkt $K_o$ auf dem Ablaufkreis 31 der Abtriebsscheibe an den Ort K. Gleichzeitig verschiebt sich das Zentrum $Z_o$ des Reibrades an den Ort Z, wobei aber der Schwenkpunkt S natürlich am gleichen Ort bleibt. Hier entsteht ein Schräglaufwinkel $\delta$ (auch Verschiebewinkel oder Regelwinkel) zwischen der Ablaufrichtung 32 auf der Reibscheibe und der Ablaufrichtung 33 des Reibrades, d.h. zwischen den Tangenten zu den jeweiligen Ablaufkreiszentren Z und M von Reibrad und Abtriebsscheibe. Einem Auslenkwinkel $\alpha$ auf der Abtriebsscheibe entspricht dabei ein Ablaufwinkel $\beta$ für das Reibrad. Für den Schräglaufwinkel $\delta$ gilt dann: $\delta = \alpha - \beta$. Dieser Schräglaufwinkel $\delta$ bewirkt eine Verschiebung des Wagens in Richtung Scheibenmitte bis zum Kontaktpunkt $K_2$. Hier ist $\delta = o$, denn Auslenkwinkel $\alpha_2$ und Ablaufwinkel $\beta_2$ sind gleich gross geworden, weil der Schwerpunkt $S_2$ mit dem Abtriebsscheibenmittelpunkt M zusammenfällt. Damit ist das Ende des Verstellbereiches, der sogenannte Neutralpunkt N, erreicht.

Man erkennt auch, dass der Regelwinkel oder Schräglaufwinkel $\delta$ mit zunehmendem Auslenkwinkel $\alpha$ steigt, d.h. mit zunehmender Schwenkung des Wagens 6, bzw. zunehmender Kraft der Vorspannfeder 21, welche z.B. über ein Gaspedal ausgeübt wird. Damit nimmt die Regelungsgeschwindigkeit zu und es kann auch eine höhere Driftkomponente bewältigt werden. Die bisherigen Ausführungen galten ohne Berücksichtigung einer Drift, welche analog dem Autopneu in der Kurve bei praktischen Reibpaarungen immer auftritt. Es entsteht dann ein mit der Schräglaufkraft ansteigender Driftwinkel $\gamma$, welcher den effektiven Schräglaufwinkel $\delta$ verringert. Unter Berücksichtigung der Drift gilt dann: $\delta = \alpha - \gamma - \beta$. Ein zunehmender Driftwinkel $\gamma$ muss daher durch vermehrte Auslenkung $\alpha$, bzw. vermehrtes Gasgeben an der Feder 21 kompensiert werden, um auf den gleichen Schräglaufwinkel $\delta$ zu kommen. Es wird unter Auftreten einer Drift auch die Regelgrenze N früher erreicht, da dann ja $\alpha_2 = \beta_2 + \gamma_2$ sein muss.

Der Neigungswinkel $\varphi$, den Reibradebene 28 und Abtriebsebene 29 einschliessen, sollte vorzugsweise klein sein, kleiner als 20°, z.B. 5 bis 15°. Um ein Optimum bezüglich Verstellgeometrie, wie auch kompakter Abmessung zu erreichen, sollte natürlich auch die Motorlänge und die Lage des Schwerpunktes des beweglichen Teils in die Optimierung einbezogen werden.

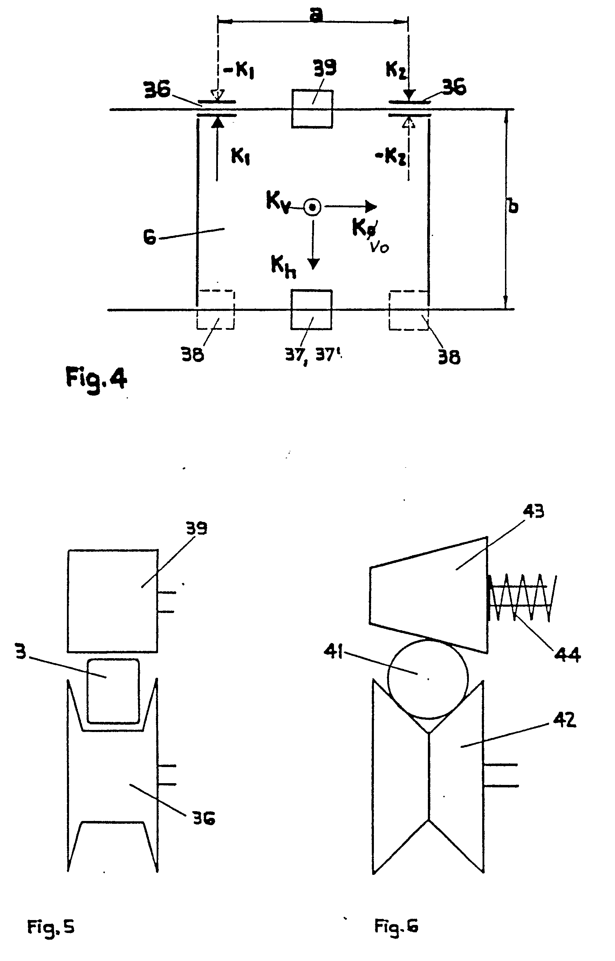

Fig. 4 zeigt eine schematische Darstellung eines Wagens 6 und der darauf wirkenden Kräfte, die von den Führungsschienen 3 und 3' aufgenommen werden müssen. Das Antriebsmoment des Motors erzeugt die beiden Kräfte $K_1$ und $K_2$, welche hier im Abstand a auf zwei Räder 36 mit je zwei Spurkränzen, die auf der Führungsschiene 3 laufen, wirken.

Weitere einwirkende Horizontalkräfte $K_h$, oder auch umgekehrte Kraftrichtungen $-K_1$, $-K_2$ bei Rekuperationsbremsung, können ebenfalls von diesen Rädern 36 aufgenommen werden. Im Falle der Regelung entsteht durch den Schräglauf eine Vortriebskraft $K_{vo}$, welche eine Verschiebung des Wagens bewirkt. Um eine möglichst leichte Regelung zu erzielen, soll natürlich der gesamte Reibungswiderstand der Wagenführung klein sein im Vergleich zu den auftretenden Regelkräften. Durch die Antriebsvorrichtung muss das Reibrad auf die Reibscheibe gedrückt werden, was eine Vertikalkraft $K_v$ auf den Wagen erzeugt. Diese wird hier durch obere Rollen 37 und 39 abgestützt. Im Prinzip genügen also zwei untere Führungsrollen 36 sowie zwei obere Stützrollen 39 und 37 und eine zugeordnete untere Stützrolle 37'.

Es sind aber noch verschiedene andere Ausführungen denkbar, z.B. vier untere Stütz- und Führungsrollen 36 und 38 mit nur einem Spurkranz an den Ecken des Wagens sowie zwei obere zylindrische Stützrollen 37 und 39, welche z.B. einstellbar ausgeführt sind, um ein gewünschtes minimales Spiel erzielen zu können. Diese Stützrollen 37 und 39 können auch durch eine Gummieinlage zusätzlich gedämpft werden analog einem Silentblock. Der Abstand b zwischen den Führungsschienen 3, 3' wird so gewählt, dass die auftretenden Kräfte und Momente günstig abgestützt werden können. Besonders geeignet ist eine Ausführung mit zweimal vier Rollen, unten vier Spurrollen aus hartem Kunststoff, z.B. Delrin und den vier einfach, leicht federnde bzw. dämpfende Gegenrollen, z.B. aus Polyurethan-Elastomer.

Figur 5 zeigt eine Anordnung mit Vierkantrohren als Führungsschienen 3 und 3', wobei auf der einen Schiene 3 zwei Wagenräder 36 mit Doppelradkranz laufen, ergänzt durch eine zylindrische Stützrolle 39 auf der Gegenseite. Auf der zweiten Schiene 3' sind dann nur noch zylindrische Rollen ohne Radkranz notwendig. Figur 6 zeigt eine weitere Ausführungsmöglichkeit der Wagenführung mit Rundstangen 41 als Führungsschienen und Doppelkegelrädern 42 unten, ergänzt durch einfache Kegelräder 43, welche z.B. durch eine Druckfeder 44 zum Aufheben des Spiels ergänzt werden können. Prinzipiell wäre die Wagenführung auch mit Kugelbüchsen oder mit Gleitlagern möglich, wobei jedoch Gleitelemente mit kleinem Reibungskoeffizienten, z.B. aus Teflon oder Olsintermaterial, notwendig sind. Auch als Führungsschienen sind verschiedene Ausführungen möglich, wie Rund- oder Kantrohre, Profile in Winkel-, T- oder U-Form.

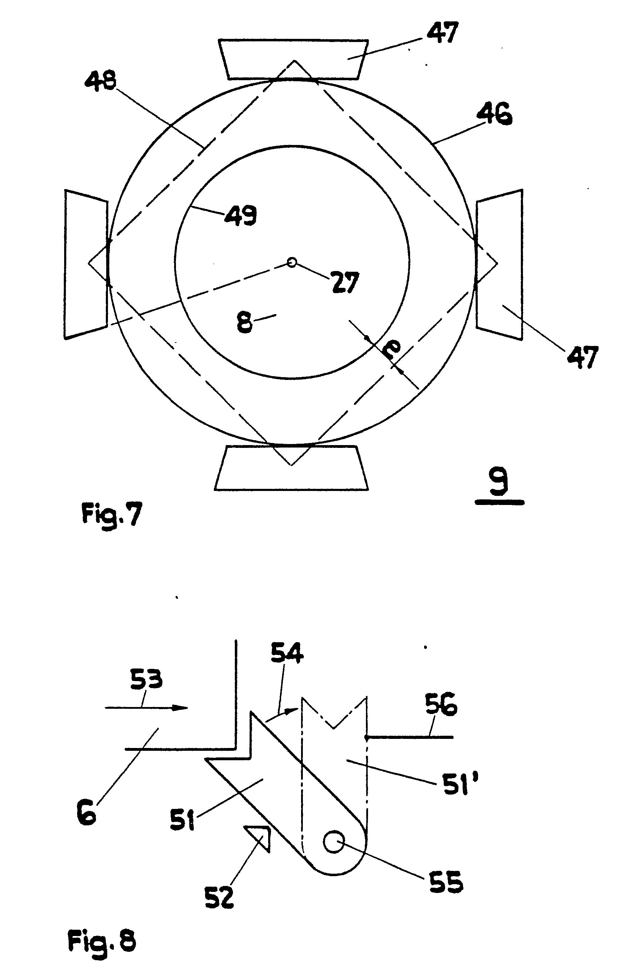

Die Anpressvorrichtung 9 soll eine Anpresskraft erzeugen, die immer gerade das Antriebsmoment bzw. die dazu proportionale Umfangskraft am Reibrad 8 ohne Rutschen übertragen kann: also Anpresskraft = Umfangskraft/Reibungskoeffizient der Reibpaarung. Dazu kann eine kleine Vorspannung mittels einer Hilfsfeder überlagert werden. Derartige Anpressvorrichtungen können durch Gleitkeile realisiert werden. Dabei empfiehlt sich eine Paarung mit niedrigem Reibkoeffizienten, z.B. aus Ölsinter-Material mit hoher Temperaturbeständigkeit wegen möglicher Erhitzung der Motorachse. Gleitkeile können dann auch als Lagerbüchsen ausgeführt werden, welche auch die axiale Führung des Reibrades auf der Motorachse übernehmen können. Eine besonders vorteilhafte Axiallagerung konnte mit Teflon-Sinterbüchsen ausgeführt werden. Dabei wurde nach Fig. 7 eine neue Anpressvorrichtung mit vier äquidistanten Anpressrädern 47 gewählt, bei welcher die quadratische Verbindungslinie 48 zwischen den Radauflagepunkten der Anpressräder (allgemein das Auflagevieleck) den Kontaktkreis 49 des Reibrades vorzugsweise vollständig umschliesst. Der Abstand e zwischen Kontaktkreis 49 und Auflagevieleck 48 ist dann also immer positiv. Bei Überschneidungen der beiden entsteht eine Wechselbelastung, was mit Geräuschen verbunden sein kann.

Die Anpressräder 47 werden von einer Halterung 46 getragen, welche fest mit der Antriebsachse 27 verbunden ist. Das Reibrad 8 wird hier durch eine Teflon-Sinterbüchse tangential und axial verschiebbar auf der Antriebsachse gelagert. Die Anpressräder 47 und die zugehörigen, auf dem Reibrad 8 befindlichen Gegenkeile können konisch gefräst werden, entsprechend einer Kegelradpaarung.

Nebst metallischen Rädern können auch nichtmetallische, leise abrollende Anpressräder, z.B. aus phenolharzgetränktem Baumwollmaterial verwendet werden. Um mögliche Unrundheiten im Ablauf der Reibräder auffangen zu können, ist es oft vorteilhaft, eine gewisse Federung der Anpressung vorzusehen, z.B. druch eine Hilfsfeder in der Anpressvorrichtung 9, durch eine geringe Eigenfederung von Motorschild oder der ganzen konstruktiven Auslegung. Die Erfordernisse leichter Federung bzw. Dämpfung geringer Walkarbeit bzw. leichter Drehbarkeit werden durch gezielten Einsatz unterschiedlicher Materialien erfüllt, z.B. durch metallische Ausmessung auf Elastomer-Rädern, Teflonlagerbüchsen und Kugellagern. Dann können auch höhere Fertigungstoleranzen und kleinere Verschmutzungen an der Reibpaarung zugelassen und verkraftet werden. Im Interesse guter Regeleigenschaften sollte der Reibbelag jedoch nicht zu weich sein. Als Beläge können verschiedene marktgängige Brems- und Reibradmaterialien, aber auch z.B. Polyurethane oder Sinterbeläge eingesetzt werden. In manchen Anwendungsfällen ist leiser Lauf erforderlich. Dann können, wie beschrieben, Geräuschdämpfungselemente an Anpressvorrichtung und Abtriebskegel vorgesehen werden, an der Abtriebsscheibe durch Anbringen eines Dämpfungssandwiches aus Metall und elastischem Zwischenmaterial.

Wenn die Begrenzung des Verstellbereichs durch einfache Anschläge erfolgt, kann dort Schräglauf auftreten, was mit hoher Abnützung des Belags, Reibungswärme und entsprechenden Leistungsverlusten verbunden ist. Um dies zu vermeiden, sind Endlagenelemente vorgesehen, welche den Auslenkwinkel $\alpha$ bzw. den Schräglaufwinkel $\delta$ auf Null zurückstellen, womit die Verstellkraft $K_{vo}$ verschwindet und die Neutralstellung erreicht wird.

Dies kann gemäss Fig. 1 durch Endlagenrollen 18, welche auf einen Endlagenkeil 19 auflaufen, erreicht werden. Eine andere Lösung zeigt der Endlagenhebel von Fig. 8. Wenn der Wagen 6 durch die Verstellkraft $K_{vo}$ in Richtung 53 auf den Endlagenhebel 51 aufläuft, so wird dieser um ein Lager 55 in Richtung 54 gedreht, bis die Auslenkung und damit auch Schräglauf und Verstellkraft aufgehoben sind. Wird eine Umkehr des Kraftflusses angewendet, z.B. bei Rückwärtsfahrt oder im Falle der Rekuperationsbremsung, so werden Schwinge 2 und Wagen 6 auf die andere Seite ausgelenkt. Um dieser Umkehr Rechnung zu tragen, können die Endlagenhebel umgeklappt werden, d.h. der Hebel 51 kann z.B. durch einen Kabelzug 56 hochgeklappt und damit ausgeschaltet werden, 51'. Analog dazu muss dann auf der andern Wagenseite der Endlagenhebel auf einen Anschlag 52 herunter geklappt werden aus seiner vorherigen hochgeklappten Stellung. Antriebsseitig geschieht die Umstellung auf Rückwärtsfahrt durch Umpolen des Motors und im Prinzip der Federn 23 und 21 von Fig. 1, d.h. die Gegenfeder 23 wird nun als Gasfeder eingesetzt, z.B. betätigt durch einen zweiten Kabelzug.

In manchen Anwendungen ist es erwünscht, eine variable oder verstellbare Drehzahlbegrenzung einzuführen. Dies kann, wie in Fig. 1 mit den Verstrebungspfeilen 70 am Endlagenelement 19 angedeutet, durch verstellbare Endlagenelemente realisiert werden. Durch kontinuierliche Verstellung kann eine beliebige Maximalgeschwindigkeit vorgegeben werden. Falls genügend Kraft auf die Schwinge 2 ausgeübt wird, wirkt dies dann wie ein Tempostat. Es können auch diskrete Positionen realisiert werden, z.B. Position 1 mit Variationsbereich von 1000 U/min bis 4000 U/min und Position 2 von 1000 U/min bis 2000 U/min mittels eines Umschalthebels.

In manchen praktischen Fällen, wie zum Wiederanfahren aus der Minimalstellung heraus ist es wesentlich, dass dies mittels Rückführorganen erreicht werden kann, welche nach Abschalten bzw. vor Wiedereinschalten des Antriebs, den Wagen in eine vorgebbare Position bringen. Wie schematisch durch den Pfeil 71 in Fig. 1 dargestellt, kann dies mittels einer leichten Feder, durch das Eigengewicht des Antriebes bei Schrägstellung der linearen Rollenführung 3, 3' oder durch entsprechende Einstellung des Kraftübertragungselementes, erreicht werden.

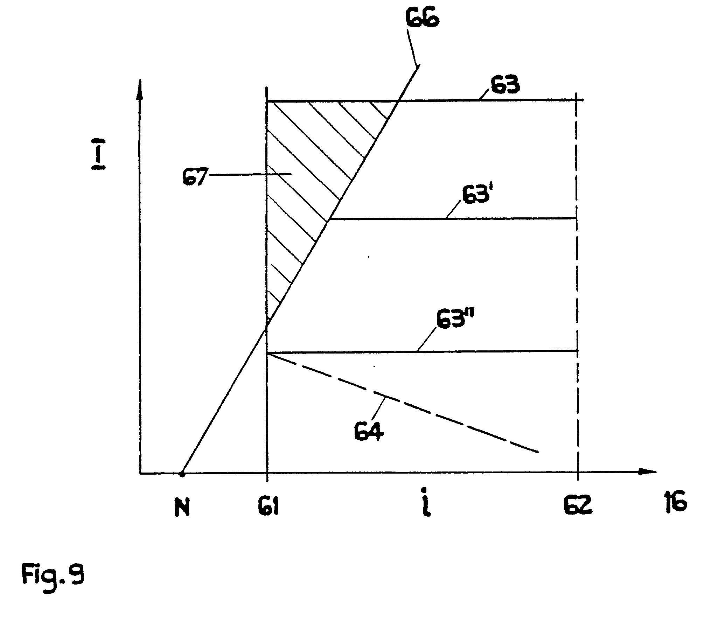

Figur 9 zeigt die mit dem erfindungsgemässen automatischen Reibrad-Drehmomentwandler erzielten Regelcharakteristiken. Auf der Verschiebeachse oder Schwenkachse 16 ist der Regel- oder Variationsbereich 61–62 aufgetragen. 61 und 62 bilden die untere bzw. obere Begrenzung desselben. Das Übersetzungsverhältnis i des Drehmomentwandlers variiert dabei z.B. von 0.4 bis 1.6, was einem Regelbereich von 4:1 entspricht.

N bedeutet den Neutralpunkt mit $\alpha = \beta$, also Schräglaufwinkel $\delta = 0$, gemäss Fig. 3. Auf der Ordinate ist der Motorstrom I und damit die abgegebene Leistung aufgetragen. Je nach eingestelltem Strom ergeben sich die Regelkurven 63, 63', 63''. Eine bestimmte, stufenlose einstellbare Gaszustellung, bzw. Vorspannkraft der Feder 22 an der Schwinge 2 (Fig. 2) ergibt dabei eine entsprechende konstante Stromaufnahme I. Die Regelkurven 63 und 63' werden hier begrenzt durch die Driftregelgrenze 66, d.h. hier ist $\alpha = \beta + \gamma$ (der Driftwinkel $\gamma$ nimmt mit I zu) und somit also $\delta = 0$. Es kann dadurch ein nicht fahrbarer Bereich 67 entstehen. Durch entsprechende Optimierung von Neutralpunkt N und Drift in Bezug auf den Regelbereich 61–62 kann dieser nichtfahrbare Bereich 67 jedoch beliebig klein gehalten werden.

Falls die Schwenkachse 16 in der Schwinge 2 etwas exzentrisch versetzt wird, so dass die Schwenkachse 16 nicht mehr senkrecht über dem Mittelpunkt M der Abtriebsscheibe bzw. des Abtriebskegels (wie in Fig. 3) zu liegen kommt, so können andere, nicht konstante Charakteristiken erreicht werden, wie dies durch die Linie 64 in Fig. 9 angedeutet wird.

Die auf die Schwinge 2 wirkenden Kraftübertragungselemente 21, 22, 23 sowie die Rückführorgane und Stellorgane für die verstellbaren Endlagenelemente können für den Endanschlag verschiedene mechanische Federn umfassen, wie Zug-, Biege- oder Torsionsfedern. Es sind aber auch elektrische, magnetische oder pneumatische Federn und Stellelemente anwendbar.

Auch für die anderen Elemente des Drehmomentwandlers sind verschiedene Ausführungen denkbar. Es können z.B. Gehäuseteile aus gebogenem Blech oder aus Spritzguss in Plastik oder Metall ausgeführt werden, oder es kann auch der Wagen 6 mit dem Motorgehäuse integriert werden, ebenso wie z.B. das Reibrad 8 inkl. Belag und Anpresskeile aus einem Stück in Polyurethan gespritzt werden könnte.

Als Beispiel wurde mit einem erfindungsgemässen Drehmomentwandler in kompakter, leichter und kostengünstiger Bauform mit einem Wandlerbereich von 4:1 mit: Bosch GPA 24V-Motor, Abtriebsscheibe aus Sphäroguss GGG 60 und geeigneten Reibbelägen (Beral, Derendinger etc.) von 4 mm Kontaktbreite, sehr gute Leistungen und Regeleigenschaften erzielt, inkl. Rekuperationsfähigkeit, mit Wirkungsgraden von 90% und mehr.

Die in der vorstehenden Beschreibung, in den Zeichnungen sowie in den Ansprüchen offenbarten Merkmale der Erfindung können sowohl einzeln als auch in geeigneten Kombinationen für die Verwirklichung der Erfindung in ihren verschiedenen Ausführungsformen wesentlich sein.

## Patentansprüche

1. Reibrad-Drehmomentwandler zur stufenlosen Änderung des Übersetzungsverhältnisses mit zwei Reibrädern (8, 11) und einer Verschiebevorrichtung, die einen Wagen (6) umfasst, der im wesentlichen parallel zu einer durch die Drehachse des einen Reibrades (11) verlaufenden Erzeugenden dieses einen Reibrades (11) linear verschieblich ist, sowie eine Schwinge (2), die mit dem Wagen (6) verbunden ist und um eine Achse (16) im wesentlichen parallel zu besagter Erzeugenden schwenkbar gelagert ist, und wobei der Wagen (6) das andere (8) der Reibräder trägt, um das Übersetzungsverhältnis, durch Verschieben des Wagens (6) mit dem andern Reibrad (8) und somit auch des Reibbereiches (K) zwischen den Reibrädern entlang der Erzeugenden, zu ändern und wobei die Verschiebevorrichtung über das andere Reibrad (8) eine Anpresskraft auf das eine Reibrad (11) ausübt, dadurch gekennzeichnet, dass zur automatischen Regelung des Übersetzungsverhältnisses

– die Schwinge (2) um eine Achse (16) schwenkbar gelagert ist, die auf derjenigen Seite des einen Reibrades (11) liegt, auf der der Reibbereich (K) liegt,
– der Wagen (6) frei verschieblich ist,
– die Anpresskraft durch eine axial auf das andere Reibrad (8) wirkende Anpressvorrichtung (9) erzeugt wird,
– die Schwinge (2) mit mindestens einem Kraftübertragungselement (21, 23) gekoppelt ist und gegen dessen Kraft schwenkbar ist.

2. Reibrad-Drehmomentwandler nach Anspruch 1, dadurch gekennzeichnet, dass mit dem Wagen (6) ein Antrieb (4) verbunden ist und dass das eine Reibrad (11) ein Abtriebskegelrad ist.

3. Reibrad-Drehmomentwandler nach Anspruch 2, dadurch gekennzeichnet, dass das Abtriebskegelrad einen Kegelöffnungswinkel von 180° aufweist.

4. Reibrad-Drehmomentwandler nach einem der Ansprüche 1-3, dadurch gekennzeichnet, dass das Kraftübertragungselement einstellbar ist, vorzugsweise ein einstellbares Federelement umfasst.

5. Reibrad-Drehmomentwandler nach einem der Ansprüche 1-4, dadurch gekennzeichnet, dass die Verschiebevorrichtung (5) eine lineare Rollenführung (3, 3', 7) für den Wagen (6) umfasst.

6. Reibrad-Drehmomentwandler nach einem der Ansprüche 1-5, dadurch gekennzeichnet, dass die Schwenkachse (16) durch den Schwerpunkt (S) der Verschiebevorrichtung (5) geht.

7. Reibrad-Drehmomentwandler nach einem der Ansprüche 1-6, dadurch gekennzeichnet, dass das Kraftübertragungselement eine Vorspannfeder (21) und eine Gegenfeder (23) umfasst, wovon mindestens eine über einen Gaszug (22) bedienbar ist.

8. Reibrad-Drehmomentwandler nach einem der Ansprüche 1-7, dadurch gekennzeichnet, dass ein doppelt wirkender, hydraulischer Stossdämpfer (24) an der Schwinge (2) vorgesehen ist.

9. Reibrad-Drehmomentwandler nach einem der Ansprüche 1-8, dadurch gekennzeichnet, dass der Neigungswinkel (φ) zwischen Antriebsachse (27) und Abtriebsachse (12) höchstens 20°, vorzugsweise 5° bis 15° beträgt.

10. Reibrad-Drehmomentwandler nach einem der Ansprüche 1-9, dadurch gekennzeichnet, dass die Anpressvorrichtung (9) eine Anpresskraft ausübt, welche im wesentlichen proportional zum Antriebsmoment ansteigt und dass eine leichte Federung der Anpressvorrichtung vorgesehen ist.

11. Reibrad-Drehmomentwandler nach einem der Ansprüche 1-10, dadurch gekennzeichnet, dass die Anpressvorrichtung mindestens drei äquidistante Anpressräder (47) aufweist, wobei vorzugsweise deren Auflagevieleck (48) den Kontaktkreis (49) des anderen Reibrades (8) vollständig umschliesst.

12. Reibrad-Drehmomentwandler nach einem der Ansprüche 1-11, dadurch gekennzeichnet, dass eine Anpressvorrichtung (9) Lager mit Teflon-Sinterbüchsen, Öl-Sinterlagern, Roll-Lagern umfasst.

13. Reibrad-Drehmomentwandler nach einem der Ansprüche 1-12, dadurch gekennzeichnet, dass die Anpressvorrichtung (9) Anpressräder mit Ringen unterschiedlicher Materialien und/oder unterschiedlichen Aufbaus aufweist, vorzugsweise einen Ring aus Polyurethan.

14. Reibrad-Drehmomentwandler nach einem der Ansprüche 1-13, dadurch gekennzeichnet, dass Endlagenelemente vorgesehen sind, welche den Schräglaufwinkel (δ) auf Null zurückstellen, z.B. Endlagenkeile (19) und Rollen (18) oder Endlagenhebel (51).

15. Reibrad-Drehmomentwandler nach Anspruch 14, dadurch gekennzeichnet, dass die Endlagenelemente diskret und/oder kontinuierlich umstellbar ausgeführt sind, zur Realisation einer verstellbaren Drehzahlbegrenzung.

16. Reibrad-Drehmomentwandler nach einem der Ansprüche 1-14, dadurch gekennzeichnet, dass Umschaltelemente (51', 56, 23) für Rekuperationsbremsung und Rückwärtsfahrt vorgesehen sind.

17. Reibrad-Drehmomentwandler nach einem der Ansprüche 1-16, dadurch gekennzeichnet, dass eine exzentrische Versetzung der Achse (16) vorgesehen ist.

18. Reibrad-Drehmomentwandler nach einem der Ansprüche 1-17, dadurch gekennzeichnet, dass an einem Reibrad (11) und/oder an der Anpressvorrichtung (9) Geräuschdämpfungselemente vorgesehen sind.

19. Reibrad-Drehmomentwandler nach einem der Ansprüche 1-18, dadurch gekennzeichnet dass Rückführorgane vorgesehen sind, die nach Abschalten bzw. vor Wiedereinschalten des Antriebs den Wagen in eine vorgebbare Position bringen.

## Revendications

1. Convertisseur de couple à roue de friction pour la modification continue du rapport de conversion, comportant deux roues de friction (8, 11) et un dispositif de translation comprenant un chariot (6) translatable linéairement, sensiblement parallèlement à une génératrice de la première roue de friction (11), qui passe par l'axe de rotation de cette première roue de friction (11), ainsi qu'un étrier oscillant (2) relié au chariot (6) et monté pivotant autour d'un axe (16) sensiblement parallèle à ladite génératrice, le chariot (6) portant la seconde roue de friction (8), pour modifier le rapport de conversion par translation du chariot (6) portant la seconde roue de friction (8), et donc également de la zone de friction (K) entre les roues de friction, le long de la génératrice, tandis que le dispositif de translation exerce une force de pression sur la première roue de friction (11) par l'intermédiaire de la seconde roue de friction (8), caractérisé en ce que pour le réglage automatique du rapport de conversion

– l'étrier oscillant (2) est monté pivotant autour d'un axe (16) situé du côté de la première roue de friction (11), sur lequel se trouve la zone de friction (K),

– le chariot (6) est translatable librement,

– la force de pression est produite par un dispositif de pression (9) qui agit axialement sur la seconde roue de friction (8),

– l'étrier oscillant (2) est couplé avec au moins un élément de transmission de force (21, 23) et peut pivoter à l'encontre de la force de cet élément.

2. Convertisseur de couple à roue de friction selon la revendication 1, caractérisé en ce qu'un mécanisme d'entraînement (4) est relié au chariot (6), et en ce que la première roue de friction (11) est une roue conique menée.

3. Convertisseur de couple à roue de friction selon la revendication 2, caractérisé en ce que la roue conique menée présente un angle d'ouverture de cône de 180°.

4. Convertisseur de couple à roue de friction selon l'une des revendications 1 à 3, caractérisé en ce que l'élément de transmission de force est réglable et comporte de préférence un élément élastique réglable.

5. Convertisseur de couple à roue de friction selon l'une des revendications 1 à 4, caractérisé en ce que le dispositif de translation (5) comprend un guidage linéaire à galets (3, 3', 7) pour le chariot (6).

6. Convertisseur de couple à roue de friction selon l'une des revendications 1 à 5, caractérisé en ce que l'axe de pivotement (16) passe par le centre de gravité (S) du dispositif de translation (5).

7. Convertisseur de couple à roue de friction selon l'une des revendications 1 à 6, caractérisé en ce que l'élément de transmission de force comporte un ressort de précontrainte (21) et un ressort antagoniste (23) dont au moins l'un peut être manœuvré par l'intermédiaire d'un dispositif d'accélérateur (22).

8. Convertisseur de couple à roue de friction selon l'une des revendications 1 à 7, caractérisé en ce qu'un amortisseur de choc hydraulique à double effet (24) est prévu sur l'étrier oscillant (2).

9. Convertisseur de couple à roue de friction selon l'une des revendications 1 à 8, caractérisé en ce que l'angle d'inclinaison (φ) entre l'axe menant (27) et l'axe mené (12) est au maximum de 20°, de préférence de 5 à 15°.

10. Convertisseur de couple à roue de friction selon l'une des revendications 1 à 9, caractérisé en ce que le dispositif de pression (9) exerce une force de pression croissant sensiblement proportionnellement au moment d'entraînement, et en ce qu'une légère élasticité du dispositif de pression est prévue.

11. Convertisseur de couple à roue de friction selon l'une des revendications 1 à 10, caractérisé en ce que le dispositif de pression présente au moins trois galets de pression équidistants (47), leur polygone d'appui (48) entourant de préférence complètement le cercle de contact (49) de la seconde roue de friction (8).

12. Convertisseur de couple à roue de friction selon l'une des revendications 1 à 11, caractérisé en ce que le dispositif de pression (9) comporte des paliers à coussinets en matériau fritté et Téflon, des paliers en matériau fritté auto-lubrifiant, des roulements à rouleaux.

13. Convertisseur de couple à roue de friction selon l'une des revendications 1 à 12, caractérisé en ce que le dispositif de pression (9) présente des galets de pression comportant des bagues de matériaux différents et/ou de structure différente, de préférence une bague en polyuréthane.

14. Convertisseur de couple à roue de friction selon l'une des revendications 1 à 13, caractérisé en ce que des éléments de fin de course qui ramènent l'angle d'inclinaison (δ) à la valeur zéro, par exemple des coins de fin de course (19) et des galets (18) ou des leviers de fin de course (51).

15. Convertisseur de couple à roue de friction selon la revendication 14, caractérisé en ce que les éléments de fin de course son conçus ajustables de façon discrète et/ou continue, pour permettre la réalisation d'une limitation réglable de la vitesse de rotation.

16. Convertisseur de couple à roue de friction selon l'une des revendications 1 à 14, caractérisé en ce que des éléments de commutation (51', 56, 23) sont prévus pour le freinage à récupération et pour la marche arrière.

17. Convertisseur de couple à roue de friction selon l'une des revendications 1 à 16, caractérisé en ce qu'un décalage excentrique de l'axe (16) est prévu.

18. Convertisseur de couple à roue de friction selon l'une des revendications 1 à 17, caractérisé en ce que des éléments d'amortissement du bruit sont prévus sur une roue de friction (11) et/ou sur le dispositif de pression (9).

19. Convertisseur de couple à roue de friction selon l'une des revendications 1 à 18, caractérisé en ce qu'il est prévu des organes de rappel qui, après mise hors circuit, ou avant remise en circuit du mécanisme d'entraînement, ramènent le chariot dans une position qui peut être prédéterminée.

## Claims

1. Friction wheel torque converter to enable stepless variation of the transmission ratio comprising two friction wheels (8, 11) and a moving device consisting of a carriage (6) able to move linearly and essentially parallel to the generatrix of one friction wheel (11), the generatrix passing through the rotary axis of said wheel, and an oscillating frame (2) connected to the carriage (6) and pivotable about an axis (16) arranged essentially parallel to said generatrix, and whereby the carriage (6) carries the other (8) of the two friction wheels so that by moving the carriage (6) with the other friction wheel (8) and thus with the friction area (K) between the friction wheels along the generatrix the transmission ratio can be varied and whereby the moving device exerts a contact force upon via the other friction wheel (8) the one friction wheel (11) characterised in that automatic controlled adjustment of the transmission ratio is achieved by

- the oscillating frame (2) being pivotable about an axis (16) which lies on that side of the one friction wheel (11), on which the friction area (K) lies,
- the carriage (6) being freely movable,
- the contact force being generated by a pressing device (9) acting axially upon the other friction wheel (8),

– the oscillating frame (2) being coupled with at least one force transmission element (21, 23) and being pivotable against the force of same.

2. Friction wheel torque converter according to claim 1, characterised in that a drive (4) is connected to the carriage (6) and in that the one friction wheel (11) is a conical output wheel.

3. Friction wheel torque converter according to claim 2, characterised in that the conical output wheel has a cone angle of 180°.

4. Friction wheel torque converter according to one of claims 1–3, characterised in that the force transmission element is adjustable, preferably comprising an adjustable elastic member.

5. Friction wheel torque converter according to one of claims 1–4, characterised in that the moving device (5) comprises a linear roller guide (3, 3', 7) for the carriage (6).

6. Friction wheel torque converter according to one of claims 1–5, characterised in that the pivotal axis (16) passes through the point of gravity (S) of the moving device (5).

7. Friction wheel torque converter according to one of claims 1–6, characterised in that the force transmission element comprises a pretensioned spring (21) and a counter spring (23), of which at least one is operable via a accelerator cable (22).

8. Friction wheel torque converter according to one of claims 1–7, characterised in that a double-acting hydraulic shock absorber (24) is attached to the oscillating frame (2).

9. Friction wheel torque converter according to one of claims 1–8, characterised in that the angle of inclination ($\varphi$) between input axis (27) and output axis (12) does not exceed 20° and preferable lies between 5° and 15°.

10. Friction wheel torque converter according to one of claims 1–9, characterised in that the pressing device (9) exerts a contact force which increases essentially proportionally to the driving torque and in that the pressing device is slightly sprung.

11. Friction wheel torque converter according to one of claims 1–10, characterised in that the pressing device has at least three equidistant pressing wheels (47), the contact polygon (48) of which preferably completely encompasses the contact circle (49) of the other friction wheel (8).

12. Friction wheel torque converter according to one of claims 1–11, characterised in that the pressing device (9) comprises bearings with Teflon sintered bushes, sintered oil bearings, roller bearings.

13. Friction wheel torque converter according to one of claims 1–12, characterised in that the pressing device (9) has contact wheels with rings of different materials and/or different structure, preferably a polyurethane ring.

14. Friction wheel torque converter according to one of claims 1–13, characterised in that limit position means are provided for resetting the skew angle ($\delta$) to zero, such as limit position wedges (19) and rollers (18) or limit position levers (51).

15. Friction wheel torque converter according to claim 14, characterised in that the limit position means are discretely and/or continually adjustable means so as to allow a speed limit to be varied.

16. Friction wheel torque converter according to one of claims 1–14, characterised in that change-over means (51', 56, 23) are provided for recuperation braking and for reversing.

17. Friction wheel torque converter according to one of claims 1–16, characterised in that an excentric displacement of axis (16) is provided for.

18. Friction wheel torque converter according to one of claims 1–17, characterised in that noise-dampening means are provided on the one friction wheel (11) and/or on the pressing device (9).

19. Friction wheel torque converter according to one of claims 1–18, characterised in that feed-set means are provided for positioning the carriage into a preset position after switch-off or prior to re-starting of the drive.

Fig.1

Fig.2

EP 0 192 684 B1

Fig.3

**Fig. 4**

**Fig. 5**

**Fig. 6**

Fig.7

Fig.8

5/5

Fig.9